# EUROPEAN PATENT APPLICATION

(11) **EP 1 189 022 A1**
(43) Date of publication of application: **20.03.2002**
(21) Application number: 00307913.4
(22) Date of filing: 13.09.2000
(51) Int. Cl.: G01C 11/06

(54) **Measurement method to find position of a target on an object**

(71) Applicant: BAE SYSTEMS plc, Farnborough, Hampshire GU14 6YU (GB)
(72) Inventor: The designation of the inventor has not yet been filed
(74) Representative: Rooney, Paul Blaise

(57) **Abstract**

A method of establishing the position of a target on an object (24), he method comprising the steps of: identifying one or more features (26a, 26b, 26c) associated with the object, the features being located at known positions on the object; applying a first target (3) to the object; establishing a datum co-ordinate system for the object based on the determined location of the features associated with the object; and, measuring using optical measuring means (6a, 6b) the position of the first target on the object relative to the one or more features so as to determine the location of the target on the object.

## Description

This invention relates to a method of determining a datum measurement system for an object, particularly, but not exclusively for use in a photogrammetry measurement system.

In computer aided manufacturing, assembly and similar techniques, it is often desired to know the exact position of a feature of an object, in the co-ordinate system of that object, to enable the object to be accurately machined or manipulated, especially by a computer-guided tool.

In order to achieve this, it is known to provide photogrammetry targets. Such targets comprise retro-reflective components or LED's which can be positioned on the object to be processed.

In use, one or more cameras, at different positions, may be used to image the object from different angles. Each target will fall within the field of view of more than one camera view. By measuring the position of each target within the field of view each of the cameras, and thus its direction from each of the cameras, the position of each target in space can be calculated, in the common frame of reference of the cameras, using standard photogrammetry techniques.

Thus, the position of a feature of the object may be determined with respect to the measured positions of the targets. However, it is frequently difficult to attach targets precisely, to known locations on the object, or to relate the positions of further targets to such targets. This has the effect of making it difficult or impossible to establish accurately a datum system for the object and so making it difficult or impossible to carry out processes on the object (e.g. by manipulating the object, or by drilling a hole at a precise location on the object) which rely on accurate measurements made in the co-ordinate system of that object.

Therefore, it would be desirable to provide a method of accurately establishing a datum measurement system for an object to enable the object to be accurately machined or manipulated.

Accordingly, there is provided a method of establishing the position of a target on an object, the method comprising the steps of: identifying one or more features associated with the object, the features being located at known positions on the object; applying a first target to the object; establishing a datum co-ordinate system for the object based on the determined location of the features associated with the object; and, measuring using optical measuring means the position of the first target on the object relative to the one or more features so as to determine the location of the target on the object.

By providing an accurate and rapid method of establishing a datum system in an object, it is possible to easily avoid the situation which may frequently occur in prior art systems, where a change in the work piece caused, for example, by thermal expansion, or distortion due to gravity causes the position of the original datums to move to unknown positions relative to a point of interest on the object; or where the original datums become obscured or lost to the field of view of one or more photogrammetry cameras, as may result from a change in the viewing angle of one or more photogrammetry cameras. The system of the present invention also allows for the working envelope to be rapidly transferred between two or more datum systems; for example, the original datum system of the work piece and several local datum systems established using the system of the present invention.

Furthermore, in certain cases, even when a datum system for the object is not obscured, it may nevertheless be difficult or impossible to accurately carry out processes on the object, if the object is very large or if the object is compliant; such objects may include aircraft wings for example. In such cases, the present invention allows the establishment of further datum systems local to the locations or features of interest.

Preferably, the optical measuring means is a photogrammetry system. Because photogrammetry is a measurement system which may be accurately be implemented over relatively great distances, the present invention is suitable for determining global datums and local datums even on large parts and assemblies, such as aircraft wings.

Other aspects and embodiments are described or claimed hereafter.

The invention will now be illustrated, by way of example only, with reference to the accompanying drawings in which:
Figure 1 illustrates schematically the components of a positioning system using photogrammetry;
Figure 2 illustrates a workpiece of the first embodiment of the invention; and,
Figure 3 illustrates schematically a known photogrammetry target.

### DESCRIPTION OF PHOTOGRAMMETRY SYSTEM

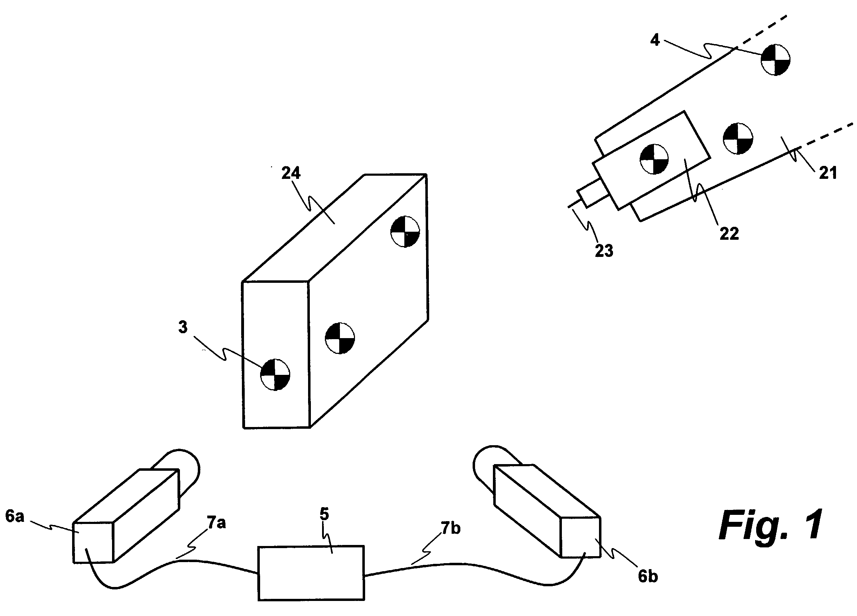

Referring to Figure 1, a photogrammetry system (located within a workshop of a factory) comprises a pair of video cameras 6a, 6b at different locations, each having within its field of view a workpiece 24 (for example, a larger workpiece such as an aircraft wing, or a smaller workpiece such as a car panel). The video cameras 6a, 6b are connected via respective cables 7a, 7b to an analysis apparatus 5, which here comprises a programmed workstation such a Sun SparcStation™, comprising a processor, memory, storage (e.g. a hard disk), and video capture electronics.

A robot 21 carries a drill 22 with a drill bit 23 (or other tool), which may work on the workpiece 24 under control of the analyser apparatus 5.

The workpiece 24 carries a number of targets 3, and the robot 21 and or drill 22 also carry targets 4.

In operation, the apparatus detects the position and orientation of the workpiece 24 within the frame of reference of the workshop; detects the position and orientation of the robot 21 within the frame of reference of the workshop; then accesses a computer aided manufacturing (CAM) file to determine the points on the workpiece to be processed (e.g. drilled); then causes the robot 21 to move the tool 22 to the correct position and orientation with respect to the workpiece 24 to perform the required operations; and, then commences the required operations, whilst monitoring the position and orientation of the tool 22 relative to the workpiece 24.

Each of the targets 3, 4, are differently coded (i.e. carry different codes on their visible surface). The analysis apparatus 5 is therefore able to determine the identity of each of the targets 3, 4, so as to match corresponding targets in the views seen by the two cameras 6a, 6b. This is done with software, operated by the analyser apparatus 5, supplied by one of those companies supplying coded targets (such as Imetric™ or Leica™), which is specifically arranged to recognise the coded marks, to identify the different targets within the field of view of the cameras 6.

Further, the codes on each target allow each to be associated with a particular known point on the workpiece 24, or the robot 21 and tool 22, the position (on the workpiece 24 or the robot 21 and tool 22) of which are stored in the CAM file stored in the memory and/or storage of the analysis apparatus 5.

It is therefore possible for the analysis apparatus 5 to derive, from the target positions, the positions of the corresponding parts of the workpiece; and hence to calculate the position and orientation of the workpiece within the frame of reference of the workshop (or, to put it differently, to calculate the transformation between the frame of reference of the workpiece itself and that of the workshop). The same is true of the position of the robot 21.

The present invention is not concerned with the details of the photogrammetry or metrology process, or of the computer aided manufacturing process, which may both be performed in conventional fashion using commercially available equipment.

### FIRST EMBODIMENT

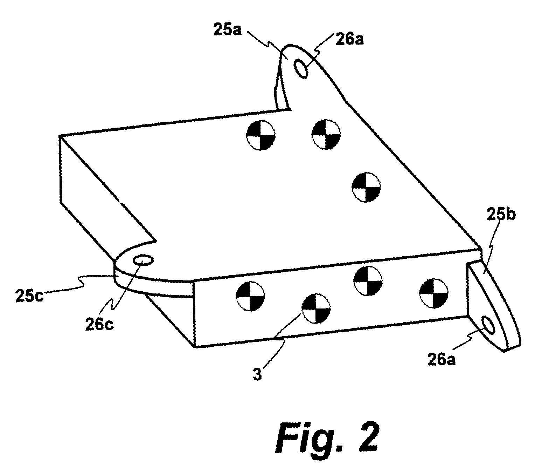

Referring to Figure 2, a workpiece 24 of the present embodiment is shown. The workpiece consists of a single body and having three protruding lugs 25 a-c. Each lug has a close tolerance hole 26 a-c, the position and orientation of which is accurately known relative to the body of the workpiece.

The workpiece 24 may be manufactured from a composite material (such as glass-fibre, carbon fibre, kevlar) or metal or any other suitable material in which it is possible to manufacture accurately formed holes; using for example a manufacturing process such as moulding, machining, or casting.

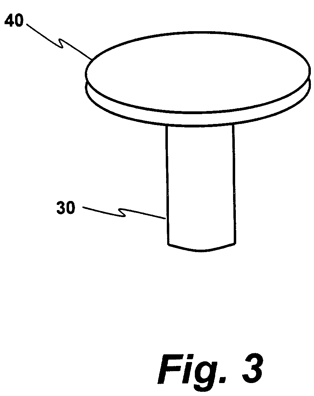

Initially, the operator of the photogrammetry system, shown in Figure 1, places a conventional photogrammetry target in each of the holes 26 a-c (not shown in Figure 2). Referring to Figure 3, a conventional coded photogrammetry target is shown, comprising an accurately machined stub 30 for locating in a correspondingly dimensioned, accurately formed hole in a workpiece; thus, accurately locating the target with respect to the workpiece. The stub 30 carries a plate 40 which has, on it's outer surface, a coding scheme (not shown) such as is used by Imetric™ or Leica™ so that the target in question may be uniquely identified by the analysis apparatus 5.

The workpiece is then positioned in the workspace of the photogrammetry system of Figure 1 and secured, where necessary, in a conventional manner to ensure that it does not move undesirably during the measurement process described below.

The operator then secures a range of coded, self-adhesive targets 3 to the workpiece in approximate positions, near to locations of interest on the workpiece; for example, where machining operations, such as drilling operations, are to be carried out.

The operator then measures the position of each target on the workpiece (including both the targets located in the holes 26 a-c and the self-adhesive targets 3) in the common frame of reference of the cameras 6a, 6b of the photogrammetry system of Figure 1, in a conventional manner as described above.

The positions of the targets located in the holes 26 a-c are accurately known in the co-ordinate system of the workpiece (since the position and orientation of the targets is defined by the close-tolerance holes in which they are positioned). Thus, by defining the three dimensional positions of a minimum number of three such known points on the workpiece in the co-ordinate system of the cameras 6a, 6b, the position and orientation of the workpiece is uniquely defined in the co-ordinate system of the cameras 6a, 6b.

By contrast, exact position of each of the self-adhesive targets 3 on the surface of the workpiece is initially unknown, as they were positioned only approximately on the workpiece as described above. However, their position in the co-ordinate system of the cameras 6a, 6b has now been determined. Thus, the relative positional offsets of each of the self-adhesive targets 3 relative to the targets located in the holes 26 a-c is determined in the co-ordinate system of the cameras 6a, 6b. These offsets are then be used to identify the exact locations of the self-adhesive targets 3 in the co-ordinate system of the workpiece, which may be achieved by virtue of the fact that the positions of the targets located in the holes 26 a-c are accurately known in the co-ordinate system of the workpiece. Thus, the datum information of the workpiece may be transferred from the original manufactured datum features (the holes 26 a-c) to the self adhesive targets.

The operator of the system may then proceed to control the robot 21 to move to the tool 22 to the correct position and orientation with respect to the workpiece 24, as measured from the locations of the self-adhesive targets 3, to perform the required machining or assembly operations.

Either before or after carrying out the machining and/or assembly operations on the workpiece, if it is desired, the targets located in the holes 26 a-c may be removed. This may be necessary for example if the lugs 25 are to be used to secure the workpiece in position in a machining or assembly process. The lugs 25 may alternatively be removed from the workpiece, prior to the workpiece being assembled with a further part. This may be carried out as part of the process of "finishing" the workpiece; for example, by routing which is conventionally used to remove excess material from composite parts or cast parts.

### OTHER EMBODIMENTS

It will be apparent to the skilled person that various alternatives or modifications to the above-described embodiments could be employed, and all are to be considered as within the scope of the present invention.

For example, although in the above described embodiment the original workpiece datums are provided by manufactured features (the holes 26 a-c, which may be created in the main manufacturing process, such as in moulds used to manufacture composites, or subsequently, the skilled reader will realise that this need not be the case. Any location which may be accurately defined on the workpiece, in the co-ordinate system of the workpiece may suffice for this purpose. For example, a co-ordinate measurement machine may be used to accurately define the position of approximately positioned, self-adhesive targets which may then serve as initial datums, from which further datums may be derived.

Furthermore, although the use of coded targets has been described in the above embodiment, the skilled person will appreciate that non-coded targets may also be used. This may be achieved by using a conventional best fit algorithm to match the measured three dimensional positions of the targets with known approximate locations stored in CAD data of the work piece.

## Claims

1. A method of establishing the position of a target on an object, the method comprising the steps of:
identifying one or more features associated with the object, the features being located at known positions on the object;
applying a first target to the object;
establishing a datum co-ordinate system for the object based on the determined location of the features associated with the object; and,
measuring using optical measuring means the position of the first target on the object relative to the one or more features so as to determine the location of the target on the object.

2. A method according to claim 1, wherein at least one of the one or more features is a second target applied to the object.

3. A method according to claim 2, wherein at least one of the one or more features is located in a close-tolerance location point on the object.

4. A method according to claim 3, wherein the close-tolerance location point on the object is a hole.

5. A method according to any one of claims 1 to 4, wherein at least one of the one or more features is located in a disposable or excess material portion of the object.

6. A method according to claim 5, further comprising the step of removing at least a part of the disposable or excess material portion of the object, the removed part comprising the at least one of the one or more features.

7. A method according to any preceding claim, wherein the step of applying a first target comprises applying the first target to approximate location on the object.

8. A method according to claim 7, wherein the first target is self-adhesive.

9. A method according to any preceding claim, wherein the first target or one or more of the second targets are coded.

10. A method according to any preceding claim, wherein the first target or one or more of the second targets are retro-reflective.
